# EUROPEAN PATENT APPLICATION

(11) **EP 0 621 111 A1**
(43) Date of publication of application: **26.10.1994**
(21) Application number: 94105870.3
(22) Date of filing: 15.04.1994
(51) Int. Cl.: B25J 9/14, B25J 9/04, B25J 19/00

(54) **Hydropneumatically controlled multi-axis manipulator**

(30) Priority: 20.04.1993 IT MI930778
(71) Applicant: UNIVER S.p.A., I-20128 Milano (IT)
(72) Inventor: Migliori, Luciano, Milano 2 (Milano) (IT)
(74) Representative: Coloberti, Luigi

(57) **Abstract**

A hydropneumatically controlled multiaxis manipulator of anthropomorphous type; the manipulator comprises a rotatable table (11) provided with an articulated arm (13), wherein each rotational axis (12, 15, 17) is connected to a hydropneumatic drive assembly (25, 28) comprising at least one active pneumatic actuator unit (25) and a passive hydraulic actuator unit (28) operatively connected one to the other, and wherein the passive hydraulic unit (28) is connected to a closed circuit comprising flow-control valve means (41, 42) pneumatically actuated; a signal generator (33) is related to the active pneumatic unit (25) to supply correlated speed and position signals, which are feedback to a control system comprising a programmable process unit (CP), and an electropneumatic control unit for the actuators (25, 28) comprising a set of solenoid valves (39, 40, 43, 44, 48) which are selectively actuated by a programmed sequence of control signals emitted by the process unit (CP), to selectively activate the actuators (25, 28) of the manipulator as a function of a programmed sequence of movements.

## Description

The present invention relates to a multiaxis anthropomorphous manipulator provided with fluid actuated control means for reference coordinates of polar and/or cylindrical type, comprising a base, a rotary support table for an articulated arm provided with a gripping device at one end; drive means are provided for rotating the support table and for moving the articulated arm between angularly and/or axially spaced positions, and for actuating the gripping member respectively as a function of programmed and preselected sets of movements of the manipulator.

Anthropomorphous manipulators are known which make use of electromechanical and/or hydraulic drive means, integrated with electronic systems for controlling the movements. The use of electromechanical and/or hydraulic drive means in presently known manipulators intended for handling relatively high weights, for example of the order of a few tens of kilograms, has considerable working limits in terms of reliability due to the extreme complexity of the manipulator, and in terms of weight-power ratio, which have limited the use of these manipulators, also in view of the high manufacturing and running costs of the manipulator itself.

Manipulators which make use of hydraulic control systems require large masses of oil in circulation and heavy armored tubes developping outside and along the articulated arm of the manipulator. Moreover, the use of hydraulic drive systems does not enable high working speeds and satisfactory working accelerations to be achieved, except by excessively increasing the mass of oil in circulation and the power of the feed pumps. This leads to excessive weight and high costs of the manipulator.

Electromechanical drive systems suffer substantially from the same disadvantages in that they require electric motors of adequate power, thus becoming bulky and high in weight in relation to the weight of manipulated pieces.

Pneumatic actuators or combined hydropneumatic drive systems which use pressurised air as an energy source are also known, due to the wide availability of the pressurised air in any work environment and to the possibility of achieving working accelerations and speeds which are greatly superior to those of conventional hydraulic drive systems.

Nevertheless, pneumatic actuators are difficult to use in drives which require a precise control of movements, due to the compressibility of the air, and to the need to use conventional control systems which are substantially linked to two unavoidable hypotheses: the first that the variable to be controlled is continuous and defined at each time instant, the second that the relationship which links the variable to be controlled to the control variable is linear.

Therefore the general object of the present invention is to avoid the disadvantages and limits of use of known manipulators, by providing a multiaxis anthropomorphous manipulator having a combined hydropneumatic drive system in combination with an electropneumatic control system which uses suitable intelligent pneumatic drive units for controlling with extreme accuracy all the working parameters such as the speed, acceleration and kinetic energy of the masses during a programmed movement of the manipulator.

A further object of the present invention is to provide a multiaxis manipulator which has an exceptionally high weight/power ratio, by means of which it is possible to move or displace loads having a relatively high weight, much higher than those of known manipulators, using comparatively lower powers.

A further scope again of the present invention is to provide a manipulator of the kind mentioned above, which can be provided with any number of rotational or articulation axes, controlled according to the specific requirements of use, and which at the same time enables its optimum use for achieving extremely precise and fast positionings as well as a selective control of the available powers for the various control units for driving the movements of the manipulator.

The above can be obtained by means of a multiaxis anthropomorphous manipulator according to Claim 1 having co-ordinates of polar and/or cylindrical type, provided with a hydropneumatic drives in combination with an electropneumatic control system comprising a programmed process unit and control signal generating means to control the separate or combined movements of the drive actuators of the manipulator.

The manipulator according to the invention, its features and some preferred embodiments thereof, will be illustrated in greater detail hereinunder with reference to the accompanying drawings, in which:
- Fig. 1: is a schematic view of an anthropomorphous manipulator, with polar axes, according to the invention;
- Fig. 2: is an enlarged sectional view of the rotary table, along line 2-2 of Figure 1;
- Fig. 3: is a diagram of the hydropneumatic drive system of the rotary table, with the relative control valves;
- Fig. 4: is an enlarged detail of the articulation of the arm to the rotary table;
- Fig. 5: is a sectional view along line 5-5 of Figure 4, showing the arrangement of the cylinders of the hydropneumatic drive assembly;
- Fig. 6: is a longitudinal sectional view of one of the two intelligent pneumatic cylinders of the drive assembly of Figure 5;
- Fig. 7: is a longitudinal sectional view of the hydropneumatic cylinder of the drive assembly of Figure 5;
- Fig. 8: is a diagram of the hydropneumatic control system of the drive assembly of Figure 5;
- Fig. 9: is a detail of the articulation between the two parts of the arm of the manipulator;
- Fig. 10: is an enlarged sectional view along line 10-10 of Figure 9, with the relative assembly of hydropneumatic drive cylinders;
- Fig. 11: is a partial sectional view of the wrist and of the gripping member, according to a first embodiment for the manipulator of Figure 1;
- Fig. 12: is a longitudinal sectional view of the pneumatic drive assembly of the wrist of Figure 11;
- Fig. 13: is an enlarged detail of Figure 12;
- Fig. 14: shows a longitudinal sectional view of a second embodiment of the wrist for the manipulator of Figure 1;
- Fig. 15: is a cross sectional view along line 15-15 of Figure 14; and
- Fig. 16: shows diagrammatically a manipulator with cylindrical coordinates incorporating the present invention.
- Fig. 17: shows the control diagram for one of the drive assembly of the articulated arm.
- Fig. 18: is a diagram of control and of the controlled variables, by using, the electropneumatic assembly of the previous figure.

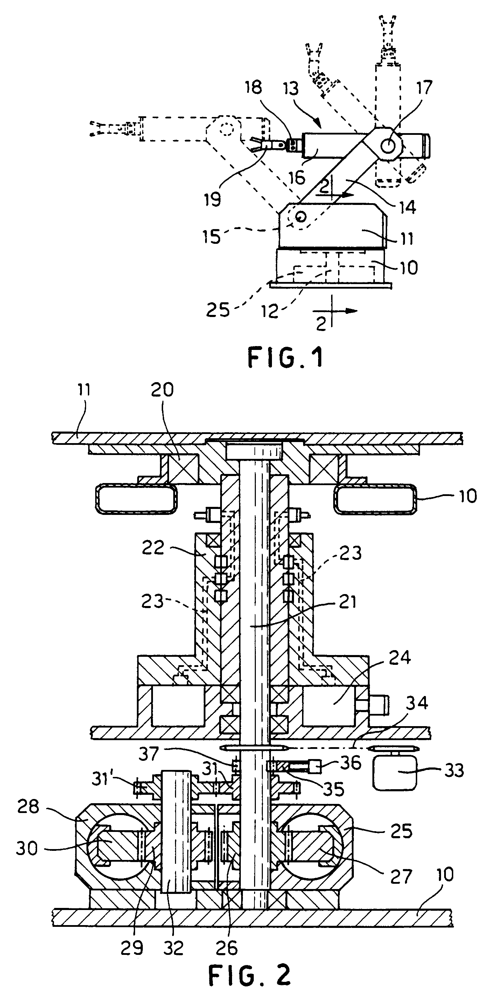

Referring now to Figures 1 to 13, we will describe the features of an anthropomorphous manipulator with polar co-ordinates according to the invention.

As shown in Figure 1, the manipulator substantially comprises a base member 10 provided with a rotary table 11 rotatably supported around a vertical axis 12; the table 11 is provided with an articulated arm 13, able to move in space and to rotate with the same table 11, as described hereinbelow.

The arm 13 comprises a rear arm portion 14 hinged to a horizontal axis 15 of the table 11, and a front arm portion 16 hinged in 17 to the rear portion 14 of the arm. At the front end of the arm 13 an articulated wrist 18 is provided to support a gripping member diagrammatically denoted by reference number 19. The two joined portion 14 and 16 of the arm 13 can angularly move one in relation to the other and in relation to the rotary table 11, and may rotate with it, the various movements being driven by respective hydropneumatic control units by which it is possible to selectively control the movement, speed and acceleration parameters of the individual arm portions, appropriately monitored by means of a programmable control unit, not shown in Figure 1, as a function of programmed movements which can be selectively controlled for the entire working area of the manipulator.

As previously related, all the movements of the manipulator are pneumatically driven and hydraulically controlled by a closed circuit, in this way totally eliminating the presence at the outside of tubes or electric conductors which are now fully incorporated in the arm of the manipulator.

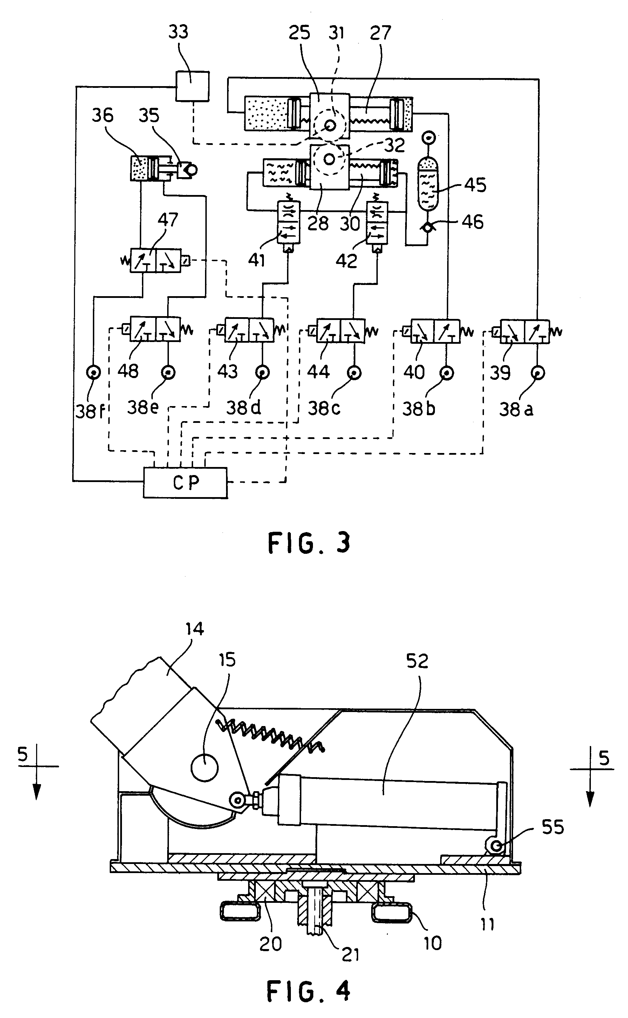

Figures 2 and 3 of the accompanying drawings show the hydropneumatic drive assembly of the supporting table for the articulated arm, in combination with a pneumatic distributor of the rotary type for supplying the several drive units of the articulated arm.

More precisely, as shown in Figures 2 and 3, the table 11 is rotatably supported by means of a taper roller bearing 20 and is connected to a shaft 21 defining the vertical axis of rotation of the table itself. The shaft 21 is rotatably supported by the base 10 by means of a system of bearings, coaxially to a rotary distributor 22, for example of the type shown, whose channels 23 are supplied with pressurised air by means of an annular distribution chamber 24 or in another suitable way. The shaft 21 is directly connected to a linear pneumatic drive unit 25 of the type comprising a pinion 26 and a rack 27 operatively connected to a braking device comprising a passive hydraulic unit 28, again of the type with pinion 29 and rack 30, by means of a pair of gears 31, 31' and the auxiliary shaft 32. In this way the reciprocating movement of the active pneumatic unit 25 is transmitted to the rack 30 of the passive hydraulic unit for control of the movements. Therefore an encoder 33 for generating reference signals is connected, via a transmission 34, to the shaft 21 and then to the pneumatic actuator 25. A locking member 35 can be actuated on command by a pneumatic cylinder 36 to engage a cogged wheel 37 connected to the shaft 21 in predetermined angular positions of the rotary table 11 of the manipulator.

As shown in the diagram of Figure 3, the two chambers of the pneumatic drive unit 25 are connected to respective sources of pressurised air 38a-38b, via respective solenoid valves 39 and 40 controlled by a process unit CP. Correspondingly, the two chambers of the passive hydraulic unit 28 are connected in closed circuit one to the other, via a double-acting flow-control valve device, diagrammatically represented by two single acting valves 41, 42 of proportional type pneumatically actuated, whose drive side is connected to the source of pressurised air 38c, 38d via corresponding solenoid valves 43, 44 controlled by the process unit CP. 45 denotes moreover a tank of pressurised oil, of appropriate capacity, for compensating possible oil leaks in the system, connected to the closed circuit via a single-acting valve 46.

Similarly, the pneumatic cylinder 36 which actuates the locking device 35 is connected to the source of pressurised air 38e, 38f via the solenoid valves 47, 48 controlled by the process unit CP.

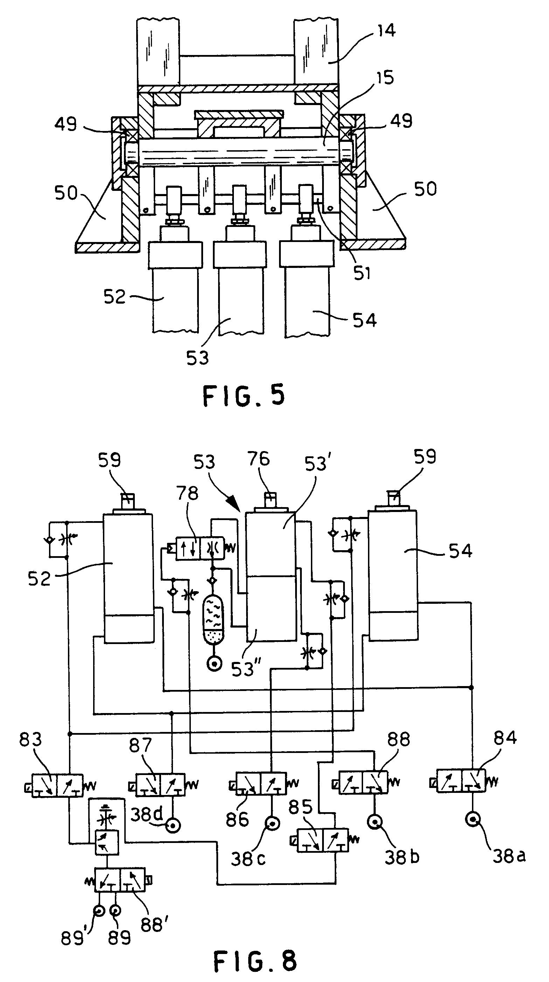

Figures 4 and 5 of the drawings show the system for hinging the arm 13 to the rotary table 11, and a group of three cylinders for driving movements in the vertical plane of the arm 13, selectively controlled in terms of displacements, speeds and accelerations, as well as powers, by a movement program stored in the process unit CP.

With reference to Figures 4 to 8, a description will now be given of the hinging of the arm to the rotary table, and the relevant hydropneumatic drive assembly.

As shown, the rear end of the arm portion 14 is hinged to the rotary table 11 along a horizontal rotational axis 15 supported, through bearings 49, by a pair of brackets 50 connected to the surface of the table 11. To the rear of the axis 15, on the side opposite which the arm 13 extends, a cross bar 51 is provided to define a short lever arm, hinged to which are the rods of the cylinders 52, 53, 54, of three linear actuators of the hydropneumatic drive assembly, hinged in 55 to the table 11.

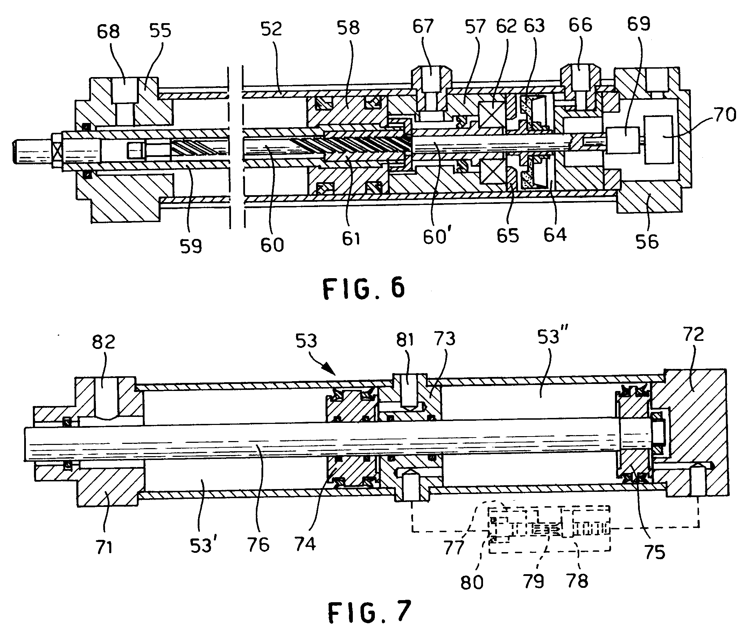

More particularly, the two side actuators 52 and 54 consist of corresponding intelligent pneumatic cylinders, for example of the type shown in Figure 6, comprising a signal generator and a locking and braking device as described hereinunder. Contrarily, the central actuator consists of a double air-oil cylinder of the type shown in Figure 7 comprising an active front part and a passive rear part as explained hereinbelow.

Briefly, as shown in Figure 6, each intelligent cylinder 52 and 54 comprises a central barrel closed by a front head 55, by a rear head 56 and comprises an intermediate block 57 which with the front head 55 defines the chamber of a pneumatic drive cylinder, while with the rear head 56 it defines the housing for a locking device and for an encoder or signal generator respectively designed to provide with extreme accuracy and with continuity an indication of the speeds, accelerations and positions of the piston 58 of the cylinder.

The piston 58 is therefore provided with a tubular stem 59 inside of which slidingly extends a threaded shaft 60 which engages with a scroll 61 inside the piston 58. The threaded shaft 60 extends to the rear for a drive shaft 60' rotatably supported by a bearing 62. A movable clutch disk 63 is rotatably supported by the drive shaft 60' in a chamber 64 in which a fixed clutch disk 65 is situated. The clutch disk 63 is axially movable in relation to the fixed disk 65, consisting for example of a flexible diaphragm disk pneumatically actuated by pressurised air fed into the chamber 64 through an air inlet 66. References 67, 68 moreover denote the air inlets for the chamber of the pneumatic drive cylinder. The drive shaft 60' is moreover connected, via a joint 69, to an electric signal generator or encoder 70 inside the rear head 56.

Figure 7 diagrammatically shows the central actuator 53 substantially consisting of a double acting cylinder, of the hydropneumatic type, comprising a front head 71, a rear head 72, and an intermediate head 73 which divides the cylinder into two sections, namely: into a front pneumatic section 53' in which a first piston 74 slides, and a rear hydraulic section 53'', in which a second piston 75 slides. The two pistons 74 and 75 are connected to a single rod 76 which projects from the front head 71 so that the reciprocating movement conferred to the piston 74 of the active pneumatic section drives the movement of the piston 75 of the passive hydraulic section for controlling accelerations and speeds. Therefore, the two chambers of the passive hydraulic section are connected to a closed circuit 77 comprising a proportional valve 78 with a progressive flow restricting member pneumatically actuated by a proportional pressure signal. This valve substantially comprises a central spool member 79 of progressive action type, having passages for the oil of gradually variable width. The spool member 79 is moved between two end positions, or between intermediate positions, by a pneumatic drive provided by a cylinder 80 at one end of the spool itself, to restrict and regulate the flow of the hydraulic fluid and hence to control the speeds and the accelerations of the pneumatic drive part, according to specific needs as a function of a working program of the manipulator.

References 81 and 82 in Figure 7 denote finally the inlets for the pressurised air in the front pneumatic section of the double air-oil cylinder.

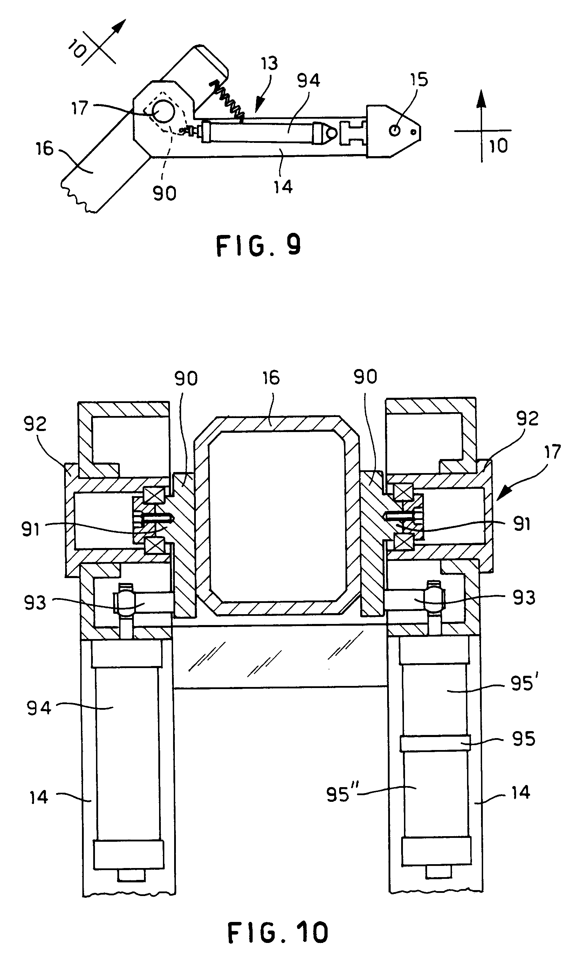

The pneumatic drive circuit diagram of the three actuators 52, 53' and 54 is shown in Figure 8 where parts similar or equivalent to those described in the previous figures have been indicated with the same reference numerals.

As can be seen from this figure, the three pneumatic actuators 52, 53' and 54 of the group are connected to the sources of pressurised air 38a-38b by means of respective solenoid valves, namely solenoid valve 83 for controlling the front chamber of the cylinders 52 and 54, solenoid valve 84 for controlling the rear chambers of the cylinders 52 and 54, solenoid valve 85 for controlling the front chamber of the cylinder 53', solenoid valve 86 for controlling the rear chamber of the cylinder 53', solenoid valve 87 for controlling the braking and locking device of the two intelligent cylinders 52 and 54, as well as solenoid valve 88 for the proportional valve 78 which controls the circulation of oil in the passive unit 53''. Finally 88 denotes a final solenoid valve by means of which it is possible to connect the front chambers of the three pneumatic cylinders 52, 53' and 54, via the respective solenoid valves 83 and 85, to two different sources of pressurised air 89 and 89', having different pressure values. In this way it is possible to control the pressures on the two sides of the pistons in the final phase of each positioning of the arm, to obtain an effective pneumatic braking effect, selectively controlled through the various solenoid valves by the process unit CP, not shown in this figure.

Figures 9 and 10 of the drawings show diagrammatically the hinging between the front portion 16 of the arm 13 of the manipulator, and the rear portion 14. In this case too the same reference numerals of the previous figures have been used to indicate similar or equivalent parts.

Said figures illustrate moreover the use of two cylinders forming a second hydropneumatic drive assembly for the arm.
As shown in Figure 10, attached on the two sides of the front portion 16 of the arm are two plates 90, each one provided with an articulation hub 91 supported through bearings by sleeves 92 of the rear arm portion 14. Each plate 90 comprises a shank 93 spaced from the hub 91, to which the rod of an intelligent cylinder 94, and of an air-oil cylinder 95 respectively are linked. As in the previous case, the air-oil cylinder 95 has a front active pneumatic section 95', and a rear passive idraulic section 95'' connected in closed circuit to a proportional valve, not shown, of the type described previously, for the control of the accelerations and speeds.

The intelligent cylinder 94 is of the type shown in Figure 6, while the hydropneumatic cylinder 95 is of the type shown in Figure 7. Their pneumatic drive circuit has not been shown in that it is wholly similar or equivalent to that of Figure 8 for the part relating to the two cylinders 52 and 53 of the assembly shown therein. Also in the case of Figure 10 the control solenoid valves and the encoder of the intelligent cylinder 94 are connected to the process unit CP of Figure 3.

In the case hypothesised, both the arm portions 14 and 16 are constant in length. Nevertheless they could be made to extend telescopically using linear pneumatic actuators, for example the intelligent cylinders of Figure 6 in combination with an air-oil cylinder of Figure 7, to provide a linear movement in addition to the movements of rotation and of training of the arm of the manipulator.

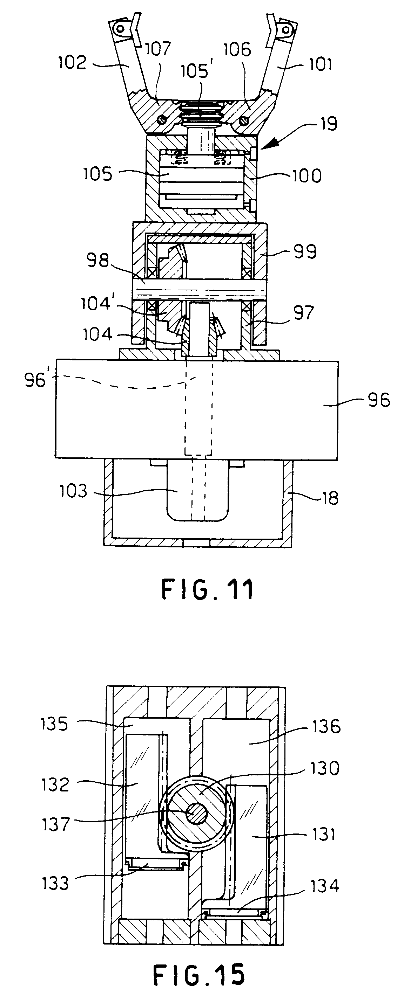

Figures 11 to 13 show a first embodiment of the wrist supporting the gripping member for the manipulator, designed to enable a simple movement of articulation around a cross axis in a manner controlled by a respective hydropneumatic drive assembly.

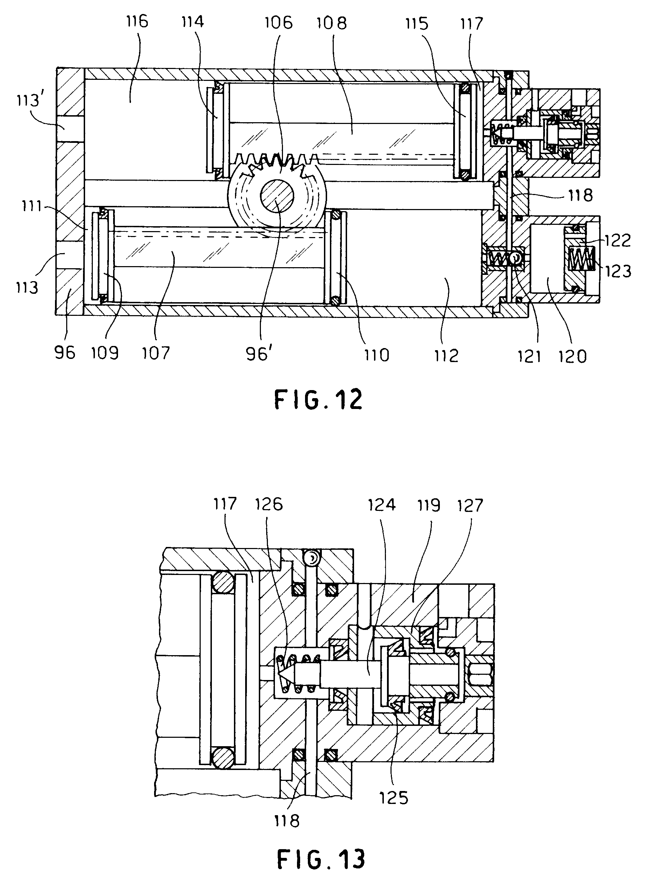

The solution of Figures 11 and 12 provides for a simple articulation of the gripping member to a wrist 18 rigidly fixed to the front end of the articulated arm 13. In this case the gripping member 19 is able to perform a simple rocking movement in the plane of the articulated arm, through an angle of 90°, assuming for example a horizontal position or a vertical position as indicated diagrammatically in Figure 1.

Attached to the wrist 18 is a hydropneumatic drive assembly of the rack and pinion type, indicated overall at 96 and illustrated in detail in Figure 12. A subbase 97 is attached to the drive assembly 96 to rotatably support an articulation axis 98 arranged crosswise to the arm, attached to a fork element 99. A pneumatic cylinder 100 for driving jaws 101 and 102 of the gripping member is in turn supported by the fork element 99.

As shown in Figure 11, the axis 96' of the double rack actuator 96 extends downwards, defining the shaft of an encoder or signals generator 103, and extends upwards respectively to be connected, by means of a pair of bevel gears 104 and 104', to the articulation axis 98.

In turn, in the example shown, the gripper 19 consists of the pair of gripping members 101 and 102 hinged to the casing of the pneumatic cylinder 100. The jaws are connected to the piston 105 by means of a circular rack 105', which engages with cogged crown wheels 106 and 107 of the two gripping members 101 and 102. It is in any case clear that the gripping member 19 could also be of any other type, in respect of what is shown.

The angular rotational movement of the gripping member around the axis of articulation 98 is achieved by means of a hydropneumatic assembly 96, shown in Figures 12 and 13, which may be of the ON-OFF type, such as to allow only the rotation of the gripping member between two limit positions, or of the progressive type with the possibility of stopping and controlling the position of the gripping member even in one or more intermediate positions by means of the solution shown. In this case the shaft 96' is connected to a central pinion 106 which engages on the two opposite sides with the racks 107 and 108 of two air-oil cylinders coupled in the manner shown. In particular, the rack 107 is integral with two pistons 109 and 110 which, with the heads of the cylinders, define an air chamber 111 and an oil chamber 112. The air chamber 111 is provided with an air inlet 113. Contrarily the second rack 108 is connected to two pistons 114 and 115 which define the air chamber 116 and the oil chamber 117 for the second air-oil cylinder. The air chambers 111 and 116 and the oil chambers 112 and 117 respectively are arranged on the same side of the assembly. 113' denotes moreover the air inlet for the chamber 116 of the second air-oil cylinder.

As in the previous cases, the two oil chambers 112 and 117 forming the passive hydraulic unit are connected one to the other by means of a closed circuit comprising a conduit 118 in the right-hand head of Figure 12, which leads to the chamber 117 via a flow-control valve 119, actuated pneumatically, and leads to the other chamber 112 directly and with a reserve tank 120 containing pressurised oil, via a single-acting ball valve 121. In this case too the oil is maintained under pressure by a small piston 122 forced by an elastic thrust system, for example springs 123.

The flow-regulation valve 119, shown in the detail of Figure 13, is of the proportional or differentiated action type and comprises a needle valve member 124 connected to a plunging piston 125 counterbiased by a spring 126. The plunging piston 125 slides inside a cup member 127 defining a second piston of greater area having a stroke shorter than the previous one so as to allow differentiated thrust actions and hence a gradual differentiated control action of the oil flow as a function of the value of the air pressure fed into the chamber of the cylinder. In fact, if initially a pressure lower than for example 2 bar is fed, first of all the second cup piston intervenes which, by acting on the first piston, pushes the needle member 124 forwards into a first adjusted position. By later intervening with a second pressure which is higher than the previous one, for example 6 bar, and gradually increasing this pressure value, it is possible to adjust further and with continuity the outflow port of the valve 119 to graduate further the circulation of the hydraulic liquid and to continuously control accelerations, speeds and displacements of the gripper 19, thus causing the gripper to stop in a required position, perfectly controlled by the hydropneumatic system described, under the management of the process unit CP. In this case too, the feeding of air under pressure to the various cylinders will be achieved by means of suitable solenoid valves controlled by the process unit CP.

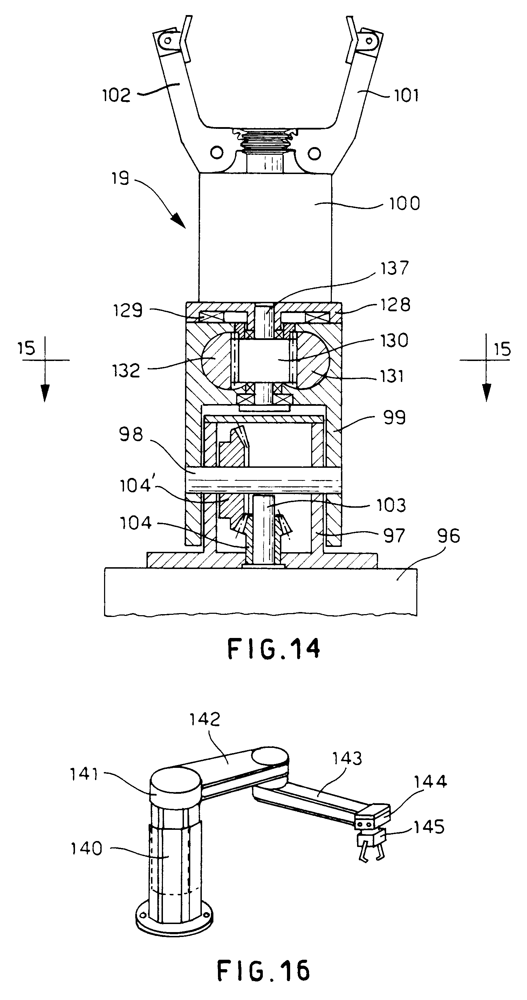

Figures 14 and 15 show another solution of the wrist to enable a composite angular rotation of the gripper and of its pneumatic drive cylinder, along a longitudinal axis of the wrist itself. In Figure 14 the same reference numerals have been used to indicate parts similar to those of the previous solution. In this case the fork element 99 has been configured in such a way as to provide a rotary subbase 128 to which the gripper 19 is attached. The rotary subbase 128 is rotatably supported by means of a bearing 129 and is driven to rotate, for example through an angle of 90°, by means of a pneumatic double-rack actuator. The actuator comprises a central pinion 130 which engages with two opposite racks 131 and 132 integral with the pistons 133 and 134 of two single-acting cylinders 135 and 136 parallelly arranged in a single body. The pinion 130 is integral with a central shaft to which the rotary subbase 128 is attached. In place of the system shown, any other system could be used for driving the rotary subbase, for example a double-rack system with planetary gears and free-wheels which enable the reciprocating movement of the two racks to be transformed into continuous rotation of the shaft 137 and hence of the gripping member 19.

Figure 16 shows finally, purely by way of an example, the possibility of manufacturing a manipulator with cylindrical axes, on the basis of the same principles of the anthropomorphous manipulator with polar axes described previously, using the same hydropneumatic drive assemblies or similar hydropneumatic assemblies which use intelligent cylinders and combined air-oil actuators in the manner described previously, the whole managed by a programmable processor to control in a selective and partialised manner speeds, accelerations, displacements and applied powers, substantially achieving all the advantages of the invention.

In the case of Figure 16 the manipulator comprises a fixed or telescopically extensible base 140, provided with a rotary table 141 from which a portion of rear arm 142 projects cantilevered to which is hinged, along a vertical axis, a portion of front arm 143 provided with a wrist 144 and a gripping member 145 similar or analogous to those described. Hydropneumatic drive assemblies for actuation of the telescopic base 140, for the rotation of the table 141 and for the angular movement of the front part 143 of the arm are obtained by means of hydropneumatic assemblies housed in the various parts of the manipulator in a manner substantially similar to what is described.

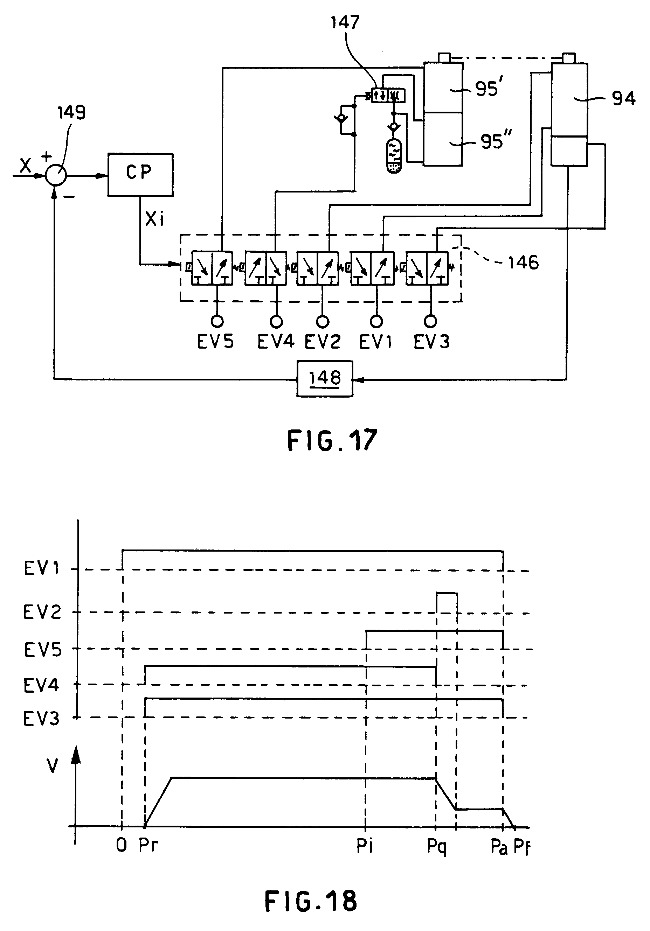

Figure 17 shows the control circuit diagram of the two cylinders 94 and 95 forming the drive assembly of the front arm part 16, while Figure 18 represents a graph of the drives of the respective solenoid valves as well as the speed curve V obtained as a function of the various positions P. Therefore, with reference to the abovementioned figures, we will describe the operating mode of the circuit of Figure 17 by way of example of the general principles of the invention.

As can be seen in the exemplified case, the pneumatic cylinders 94 and 95' of the assembly, as well as the throttle valve 147 for controlling the passive hydraulic actuator 95'', are connected to respective sources of pressurised air by means of a set of solenoid valves EV1, EV2, EV3, EV4 and EV5 which as a whole form an electropneumatic unit 146 for controlling the axis, managed by the process unit CP. A feature of the electropneumatic unit 146 for feeding pressurised air to the various actuators, under the control of the process unit CP, is to have all the input variables Xi individually correlated to the pneumatic output signals by means of non-linear or discontinuous functions, given by the solenoid valve actuation graphs of Figure 18, to achieve in any case a continuous control speed curve as a function of the displacements of the jointed arm of the manipulator.

In particular, the data relating to the required movement are provided by a programmable memory of the process unit CP, which data being compared in feedback with the data relating to the position acquired by the arm, supplied in a digital form by the pulse generator or encoder 148 related to the intelligent pneumatic drive unit 94 of the front arm part 16 now being considered. The error signal in output from the comparison node 149 is fed in input to the process unit CP, one of whose permanent memories contains the control modes and supplies in output all the control variables Xi of the solenoid valves EV1-EV5.

Normally both the chambers of the cylinders are under pressure; according to an operating mode, starting from the initial position 0, the solenoid valve EV1 is first actuated to release pressurised air from a chamber of the cylinder 94, with a slight delay Pr, after which the solenoid valves EV3 are actuated to release the brake of the cylinder 94, and EV4 of the throttle valve of the passive hydraulic circuit 95''. After a rapid increment, the speed of the arm remains constant up to a position Pi in which the solenoid valve EV5 of the pneumatic actuator 95' is actuated to provide a supplementary thrust, if required, for example in order to overcome a greater resistance to the movement of the jointed arm. Having reached a predetermined position Pq, near the final position Pf, the solenoid valve EV4 is actuated to modify the conditions of circulation of the oil in the passive circuit: simultaneously a counterpressure pulse is given in the second chamber of the cylinder 94 by means of the solenoid valve EV2 to obtain a rapid controlled deceleration of the arm, which continues to move as far as Pa at a decreased speed: in Pa the solenoid valves EV1, EV2, EV3 are de-actuated to interrupt the supply of pressurised air and to actuate a device for locking or braking the intelligent cylinder 94 respectively. Therefore the arm gradually reduces its speed until it is positioned exactly in Pf. What was said for the drive assembly of Figure 17 also holds true for the remaining drive assemblies of the actuator.

From what has been said it is therefore clear that, in spite of the non-linearity of the control function of the system, in which the individual input variables at the unit 146 are not in any way correlated by continuous and univocally defined functions with the respective pneumatic signals in output, starting from a group of control variables provided according to a predetermined sequence by the process unit CP, it is possible to actuate selectively the various solenoid valves to obtain a programmed sequence of pressure signals in the various actuators which enable a constant control of the speeds and positions of each drive assembly of the manipulator. In this way it is possible to use a group of ON-OFF solenoid valves for each electropneumatic unit, substantially simplifying the system and reducing energy consumptions and running costs of the entire manipulator.

## Claims

1. Hydropneumatically controlled multiaxis manipulator of polar and/or circular axes type comprising: a base (10), a rotary table (11) on the base (10) for supporting an articulated arm (13), and drive means (25) for rotating the support table (11) and for moving said articulated arm (13) between angularly spaced positions, characterised in that each rotational or articulation axis (12, 15, 17) of the manipulator is connected to a hydropneumatic drive assembly (25, 28; 52, 53, 54; 94, 95) comprising at least one active pneumatic unit (25; 52, 54; 94), and a passive hydraulic unit (28, 53, 95), in which said passive hydraulic unit (28, 53, 95) is connected to a closed circuit comprising a flow restricting valve device (41, 42; 78) pneumatically actuated;
and a control system for controlling speeds and positions of each axis (12, 15, 17) of the manipulator, said control system comprising a process unit (CP) fed with reference data, and with position and speed data of the axis respectively, supplied by a signal generator (70) related to the respective hydropneumatic drive assembly (25, 28; 52, 53, 54; 94, 95), and an electropneumatic control assembly comprising a plurality of solenoid valves (39, 40, 43, 44, 47, 48) controlled by said process unit (CP) for feeding pressurised air to the various drive assemblies (25, 28; 52, 53, 54; 94, 95), said process unit (CP) comprising a memory programmed for providing a selective sequence of control signals for the solenoid valves (39, 40, 43, 44, 47, 48), correlated one to the other as a function of a command sequence of the various hydropneumatic drive assemblies (25, 28; 52, 53, 54; 94, 95), corresponding to a program of preselected movement for the articulated arm of the manipulator.

2. Manipulator according to claim 1, characterised in that each hydropneumatic drive assembly for the articulated arm comprises at least one linear pneumatic cylinder (52) having a piston member (58) provided with a screw nut (61) engaging with a threaded drive shaft (60, 60') of the signal generator (70), which is made to rotate by the reciprocating movement of the piston member (58), and in that a pneumatically actuated locking member (63, 64, 65) is connected to said threaded shaft (60, 60').

3. Manipulator according to claim 1, characterised in that said base (10) comprises a rotary distributor (22) for supplying pressurised air to the various drive assemblies.

4. Manipulator according to claim 1, characterised in that at least part of the drive assemblies of the actuator are of the pinion and rack type.

5. Manipulator according to claim 1, characterised in that the drive assemblies of the articulated arm comprise at least one active pneumatic drive unit (52, 54), and one hydropneumatic unit (53) respectively consisting of an air-oil cylinder (53', 53'') operatively connected to the pneumatic drive unit (52, 54), and in that said control unit (CP) is programmed to selectively actuate all the pneumatic drive units (52, 53, 54), or part of them, as a function of the predetermined angular positions of the articulated arm.

6. Manipulator according to the previous Claim 1, characterised in that said articulated arm is connected to an elastic weight-balancing system positioned in proximity of the articulation axis (15, 17).

7. Manipulator according to claim 1, characterised in that each passive hydraulic unit (28, 53, 95) is connected to a closed circuit comprising a pressurised tank (33) containing pressurised hydraulic fluid at constant pressure.

8. Manipulator according to claim 1, characterised in that at least one of the two parts (14, 16) of the articulated arm (13) consists of telescopically sliding elements.

9. Manipulator according to Claim 1, characterised in that a gripping member (19) is provided, said gripping member (19) being rotatably supported along one or more orthogonal axes, and along an axis longitudinal to the arm of the manipulator respectively, and in that each articulation and rotational axis of the gripping member (19) is provided with a respective hydropneumatic drive assembly.
